# FASCICULE DE BREVET EUROPEEN

(11) **EP 3 778 313 B1**
(45) Date de publication et mention de la délivrance du brevet: **13.11.2024**
(21) Numéro de dépôt: 20190407.5
(22) Date de dépôt: 11.08.2020
(51) Int. Cl.: B60R 21/231, B62J 1/16, B62J 27/20, B60R 21/207

(54) **SYSTÈME DE PROTECTION, SIÈGE BÉBÉ ET UTILISATION METTANT EN OEUVRE UN TEL SYSTÈME DE PROTECTION**
SCHUTZSYSTEM, BABYSITZ UND ANWENDUNG ZUR UMSETZUNG DIESES SCHUTZSYSTEMS
PROTECTION SYSTEM, BABY SEAT AND USE IMPLEMENTING SUCH A PROTECTION SYSTEM

(30) Priorité: 12.08.2019 FR 1909148
(43) Date de publication de la demande: 17.02.2021
(73) Titulaire: Helite, 21121 Fontaine-les-Dijon (FR)
(72) Inventeur: THEVENOT, Gérard, 21380 MESSIGNY ET VANTOUX (FR); BAVEREL, Camille, 21000 DIJON (FR); LAYLE, Barbara, 21600 LONGVIC (FR); HERPIN, Angélique, 34400 LUNEL (FR); QUEDDIS, Hicham, 21000 DIJON (FR); MAIRET, Isabelle, 21800 QUETIGNY (FR); FLEURANCE, Anne-Laure, 21000 DIJON (FR)
(74) Mandataire: Plasseraud IP

(56) Documents cités:
- WO-A1-2016/105269
- CN-A- 109 204 218
- JP-A- 2016 040 171
- US-A1- 2003 214 122
- US-A1- 2014 084 645
- US-A1- 2019 023 214

## Description

L'invention se rapporte à un système de protection, et à une utilisation d'un tel système de protection.

### Technique antérieure

L'invention s'applique à la protection d'un enfant sur un siège bébé de bicyclette.

La bicyclette connaît une utilisation grandissante en milieu urbain pour des trajets du quotidien. Ces trajets incluent des trajets dans lesquels un utilisateur de la bicyclette est accompagné d'un enfant. L'enfant est alors assis sur un siège bébé généralement installé au-dessus d'une roue arrière de la bicyclette, par exemple sur un porte-bagage.

Outre les risques d'accident de circulation, l'emplacement du siège-bébé rend instable la bicyclette à vitesse réduite et à l'arrêt.

Il en résulte donc pour l'enfant assis dans le siège bébé une multitude de situations d'accident.

Un système de protection d'un enfant sur un siège bébé de bicyclette selon le préambule de la revendication 1 est décrit dans le document WO 2016/105269.

### Résumé

L'invention vise à pallier les problèmes évoqués ci-dessus.

A cet effet, selon un premier aspect, l'invention concerne un système de protection d'un enfant sur un siège bébé de bicyclette, le siège bébé comportant une assise et un dossier délimitant un espace de réception orienté selon une direction longitudinale pour recevoir l'enfant, le siège bébé présentant une surface extérieure opposée à l'espace de réception, le système de protection comprenant :
- un support configuré pour être monté sur le siège bébé,
- un dispositif de protection comprenant une structure de protection gonflable montée sur le support,
dans lequel le dispositif de protection présente :
- tant qu'aucune situation d'accident n'est détectée, un état inactif dans lequel la structure de protection est dégonflée et repliée sur le support,
- lorsqu'une situation d'accident est détectée, un état actif dans lequel la structure de protection est gonflée de sorte à entourer au moins en partie l'espace de réception autour d'un axe de structure sensiblement perpendiculaire à l'assise.

Le support est configuré pour être monté sur la surface extérieure du dossier du siège bébé.

Le support comprend un système de fixation amovible au siège bébé.

Le système de fixation amovible comprend une capuche configurée pour être enfilée sur une partie supérieure du dossier opposée à l'assise, et un dispositif de tension configuré pour mettre en tension la capuche sur la partie supérieure du dossier.

Le support du système de protection peut ainsi être mis en place de manière simple, rapide et reproductible par rapport au siège bébé, quel que soit le type de siège bébé. La fiabilité et l'adaptabilité du système de protection s'en trouvent améliorées.

Le support peut comprendre une enveloppe support souple configurée pour recouvrir au moins une partie de la surface extérieure du dossier, l'enveloppe support s'étendant entre une première extrémité comprenant la capuche, et une deuxième extrémité opposée à la première extrémité, le dispositif de tension comprenant au moins un organe d'accrochage solidarisé à la deuxième extrémité de l'enveloppe support et configuré pour être fixé sur le siège bébé à distance de la partie supérieure du dossier.

L'organe d'accrochage peut comprendre une sangle de longueur réglable s'étendant depuis la deuxième extrémité de l'enveloppe support jusqu'à une extrémité libre configurée pour être fixée au siège bébé.

L'enveloppe support peut comporter un compartiment sur une partie recouvrant la surface extérieure du dossier, entre le dispositif de tension et la capuche.

La structure de protection gonflable peut être est montée de manière amovible sur le support. La modularité du système de protection s'en trouve améliorée.

La structure de protection peut comporter une partie de protection latérale destinée à protéger l'enfant selon une direction transversale, la partie de protection latérale comportant deux parois latérales solidarisées au support et configurées pour s'étendre en regard l'une de l'autre, de part et d'autre de l'espace de réception dans l'état actif du dispositif de protection.

Chacune de parois latérales de la partie de protection latérale peut être constituée d'un ensemble de manchons tubulaires, et le dispositif de protection peut comporter en outre au moins une toile solidarisée à l'ensemble de manchons tubulaires de chacune des parois latérales.

Pour un siège bébé comprenant des accoudoirs délimitant l'espace de réception selon la direction transversale, les accoudoirs présentant respectivement des bords supérieurs à distance de l'assise, les parois latérales peuvent s'étendre au-dessus des bords supérieurs des accoudoirs dans l'état actif du dispositif de protection.

La structure de protection peut comporter une partie de protection frontale destinée à protéger l'enfant selon la direction longitudinale, la partie de protection frontale comportant une paroi frontale solidarisée au support et configurée pour s'étendre en regard de l'espace de réception dans l'état actif du dispositif de protection.

La paroi frontale peut être formée par deux retours s'étendant respectivement depuis les parois latérales et configurés pour se rejoindre en regard de l'espace de réception dans l'état actif du dispositif de protection.

Les retours peuvent être configurés pour se chevaucher selon la direction longitudinale dans l'état actif du dispositif de protection.

Les retours peuvent être pourvus d'un système d'accrochage configuré pour accrocher lesdits retours entre eux.

La structure de protection peut comporter une partie de protection dorsale destinée à protéger l'enfant selon la direction longitudinale, la partie de protection dorsale comportant une paroi dorsale solidarisée au support et configurée pour s'étendre en regard de la surface extérieure du dossier.

Le dispositif de protection peut être configuré pour présenter un état verrouillé interdisant le dispositif de protection de passer dans l'état actif tant que le support n'est pas monté sur le dossier du siège bébé, et un état déverrouillé autorisant le dispositif de protection à passer dans l'état actif lorsque le support est monté sur le dossier du siège bébé et qu'une situation d'accident est détectée.

Le dispositif de protection peut être configuré pour fournir une indication à l'utilisateur de l'état choisi parmi l'état verrouillé et l'état déverrouillé dans lequel est ledit dispositif de protection.

La structure de protection peut comporter une partie de protection supérieure destinée à protéger l'enfant selon une direction verticale, la partie de protection supérieure comportant une paroi supérieure solidarisée au support et configurée pour s'étendre transversalement par rapport à l'axe de structure dans l'état actif du dispositif de protection.

La structure de protection peut être constituée d'au moins une enveloppe délimitant une chambre intérieure, la chambre intérieure étant remplie d'un gaz dans l'état actif du dispositif de protection, et vide dans l'état inactif du dispositif de protection.

Le dispositif de protection peut comprendre au moins un réservoir de gaz et un dispositif d'actionnement connecté au réservoir de gaz et à la structure de protection, le dispositif d'actionnement étant configuré pour détecter une situation d'accident et pour laisser le dispositif de protection dans l'état inactif tant qu'aucune situation de risque n'est détectée, la structure de protection étant isolée par rapport au réservoir de gaz, et faire passer le dispositif de protection dans l'état actif lorsqu'une situation d'accident est détectée, la structure de protection étant en communication de fluide avec le réservoir de gaz.

Selon un deuxième aspect, l'invention concerne un siège bébé de bicyclette comprenant un système de protection tel que défini ci-dessus, le siège bébé comportant une assise et un dossier délimitant un espace de réception orienté selon une direction longitudinale pour recevoir l'enfant, le siège bébé présentant une surface extérieure opposée à l'espace de réception, le support étant monté sur la surface extérieure du dossier du siège bébé, la capuche du système de fixation amovible étant enfilée sur la partie supérieure du dossier opposée à l'assise, et le dispositif de tension mettant en tension la capuche sur la partie supérieure du dossier.

Selon un troisième aspect, l'invention concerne une utilisation d'un système de protection tel que défini ci-dessus pour protéger un enfant sur un siège bébé de bicyclette, le siège bébé comportant une assise et un dossier délimitant un espace de réception orienté selon une direction longitudinale pour recevoir l'enfant, l'utilisation prévoyant de :
- monter le support sur le siège bébé en enfilant la capuche du système de fixation amovible sur la partie supérieure du dossier opposée à l'assise, et en mettant en tension la capuche sur la partie supérieure du dossier par le dispositif de tension,
- tant qu'aucune situation d'accident n'est détectée, laisser le dispositif de protection dans l'état inactif dans lequel la structure de protection est dégonflée et repliée sur le support,
- lorsqu'une situation d'accident est détectée, faire passer le dispositif de protection dans l'état actif dans lequel la structure de protection est gonflée de sorte à entourer au moins en partie l'espace de réception autour d'un axe de structure sensiblement perpendiculaire à l'assise.

### Brève description des dessins

D'autres objets et avantages de l'invention apparaîtront à la lecture de la description qui suit de modes de réalisation particuliers de l'invention donnés à titre d'exemple non limitatif, la description étant faite en référence aux dessins annexés dans lesquels :
[Fig. 1]
[Fig. 2]

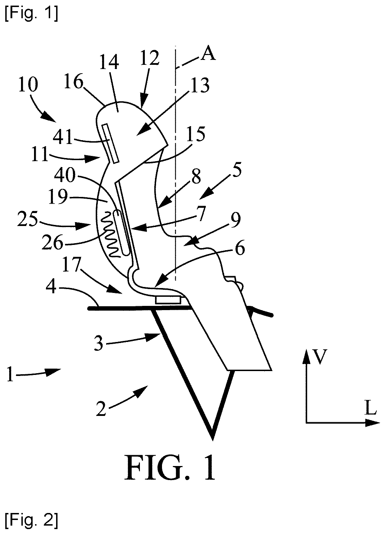

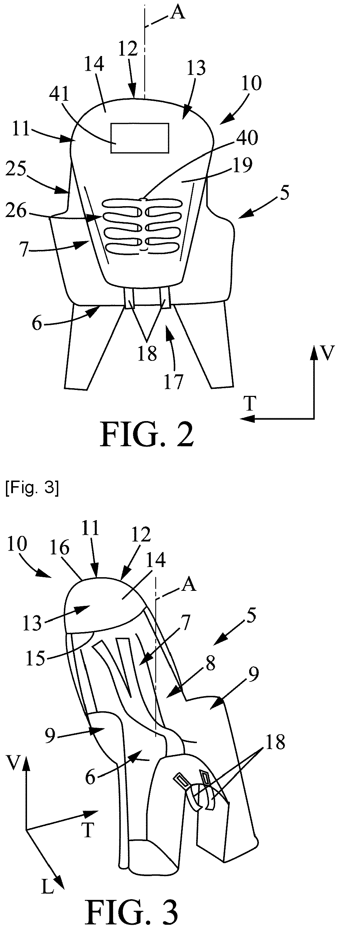

[Fig. 3] - les figures 1 à 3 sont des représentations respectivement en vue latérale, en vue de dos et en perspective de face d'une partie arrière de bicyclette sur laquelle est montée un siège bébé équipé d'un système de protection selon un premier mode de réalisation de l'invention, le système de protection comprenant un support et un dispositif de protection, le dispositif de protection comprenant une structure de protection gonflable montée sur le support, le dispositif de protection étant dans un état inactif dans lequel la structure de protection est dégonflée et repliée sur le support,
[Fig. 4]
[Fig. 5]
[Fig. 6] - les figures 4 à 6 sont des représentations respectivement en vue latérale, en vue de dos et en perspective de face de la partie arrière de bicyclette des figures 1 à 3, le dispositif de protection étant dans un état actif dans lequel la structure de protection est gonflée de sorte à entourer au moins en partie un espace de réception siège bébé recevant l'enfant, autour d'un axe de structure sensiblement perpendiculaire à une assise du siège bébé,
[Fig. 7] - la figure 7 est une représentation en perspective d'une structure gonflable selon une première variante du premier mode de réalisation du système de protection des figures 1 à 3,
[Fig. 8] - la figure 8 est une représentation en perspective d'une structure gonflable selon une deuxième variante du premier mode de réalisation du système de protection des figures 1 à 3,
[Fig. 9]

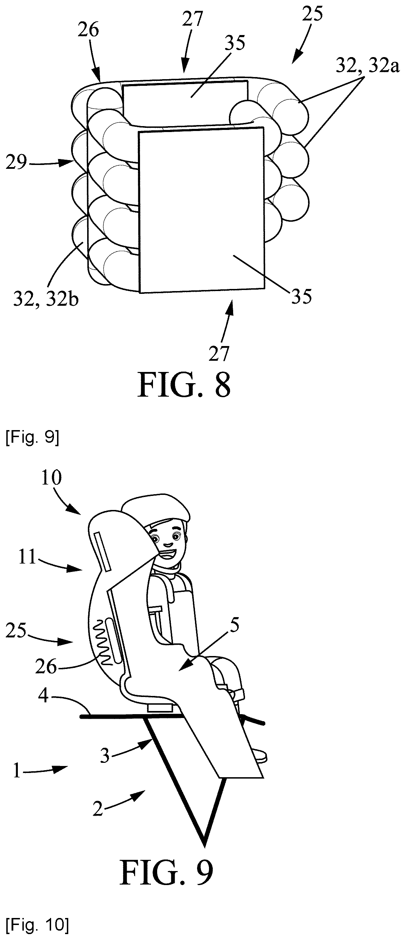

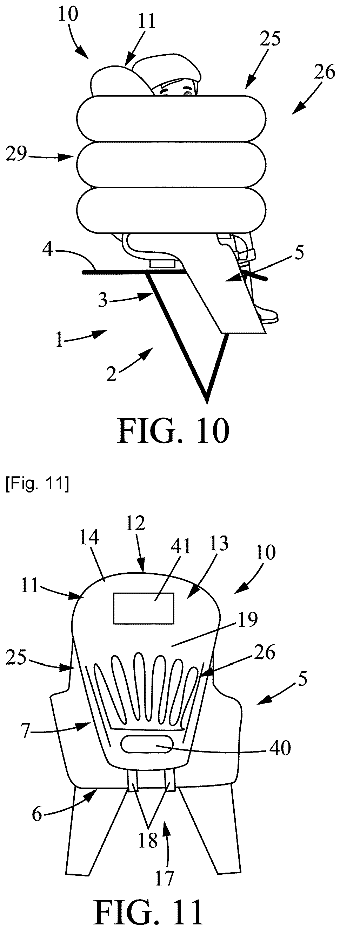

[Fig. 10] - les figures 9 et 10 sont des représentations en vue latérale d'une utilisation du système de protection de la figure 1
[Fig. 11]

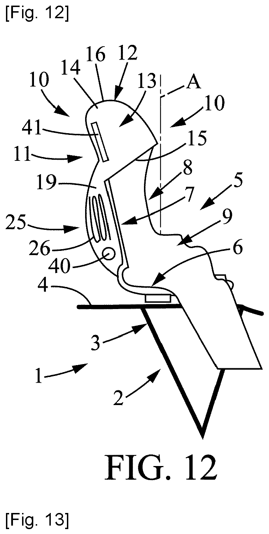

[Fig. 12] - les figures 11 et 12 sont des représentations sont des représentations respectivement en vue latérale et en vue de dos de la partie arrière de bicyclette sur laquelle est montée le siège bébé équipé d'un système de protection selon un deuxième mode de réalisation de l'invention, le dispositif de protection étant dans l'état inactif,
[Fig. 13]
[Fig. 14]

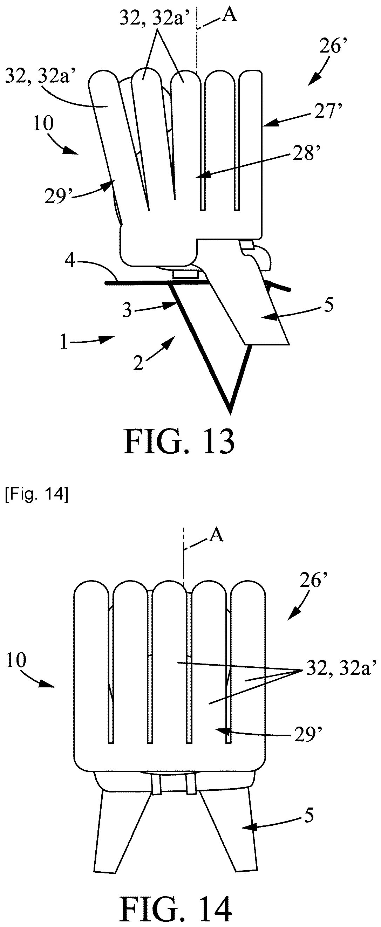

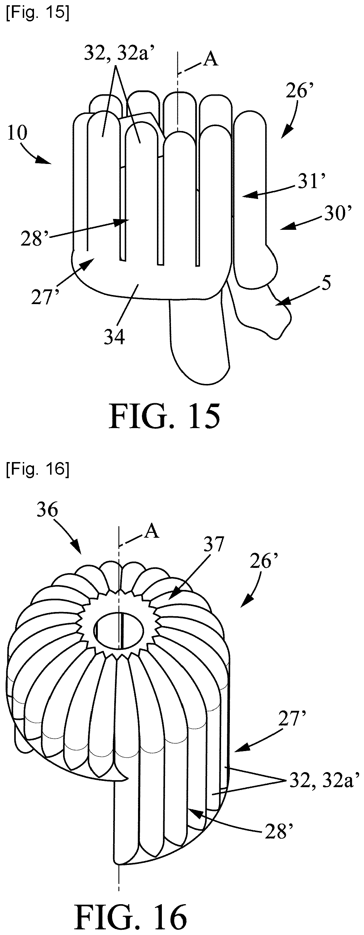

[Fig. 15] - les figures 13 à 15 sont des représentations respectivement en vue latérale, en vue de dos et en perspective de face de la partie arrière de bicyclette des figures 11 et 12, le dispositif de protection étant dans l'état actif,
[Fig. 16] - la figure 16 est une représentation en perspective d'une structure de protection selon une variante du deuxième mode de réalisation du système de protection des figures 11 et 12.

### Description des modes de réalisation

Sur les figures, les mêmes références désignent des éléments identiques ou analogues.

Les figures 1 à 3 représentent une partie arrière 2 de bicyclette. La bicyclette 1 comporte :
- un cadre 3 s'étendant selon une direction longitudinale L présentant une partie avant pourvue d'un pivot,
- un guidon de direction monté pivotant sur le pivot du cadre, et
- une roue directrice montée pivotante sur le guidon de direction selon un axe de roue perpendiculaire à une direction de déplacement.

Un utilisateur peut modifier la direction de déplacement en tournant le guidon de direction.

La partie arrière 2 de bicyclette comporte une partie du cadre 3 sur laquelle est montée une roue arrière, et un porte-bagage 4 surmontant la roue arrière.

Un siège bébé 5 est monté sur la partie arrière 2 de bicyclette, par exemple sur le porte-bagage 4. Le siège bébé 5 comporte une assise 6 et un dossier 7 dont des surfaces intérieures respectives délimitent un espace de réception 8 orienté selon la direction longitudinale L pour recevoir un enfant. Le siège bébé 5 comporte également des accoudoirs 9 délimitant l'espace de réception 8 selon une direction transversale T perpendiculaire à la direction longitudinale L. Les accoudoirs 9 présentent respectivement des bords supérieurs à distance de l'assise 6.

Le siège bébé 5 est équipé d'un système de protection 10 de l'enfant.

Le système de protection 10 comprend un support 11 configuré pour être monté sur une surface extérieure du siège bébé 5 opposée à l'espace de réception 8. Dans les modes de réalisation représentés, le support 11 comprend une enveloppe support 12 souple, notamment en matière textile, pourvue d'un système de fixation amovible 13 au dossier 7 du siège bébé 5. L'enveloppe support 12 est configurée pour recouvrir au moins une partie de la surface extérieure du dossier 7. En particulier, l'enveloppe support 12 s'étend entre une première extrémité destinée à être placée en regard d'une partie supérieure du dossier 7 du siège bébé, et une deuxième extrémité opposée à la première extrémité et destinée à être placée, dans le mode de réalisation représenté en regard d'une base du dossier 7 du siège bébé.

Le système de fixation amovible 13 comprend une capuche 14 présentant une extrémité inférieure 15 ouverte et une extrémité supérieure 16 fermée. La capuche 14 est agencée à la première extrémité de l'enveloppe support 12 pour pouvoir être enfilée sur une partie supérieure du dossier 7 opposée à l'assise 6.

Le système de fixation amovible 13 comprend également un dispositif de tension 17 configuré pour mettre en tension la capuche 14 sur la partie supérieure du dossier 7. Le dispositif de tension 17 comprend au moins un organe d'accrochage solidarisé à la deuxième extrémité de l'enveloppe support 12 et configuré pour être fixé sur le siège bébé à distance de la partie supérieure du dossier 7. Sur les figures 1 à 3, sans y être limité, le dispositif de tension 17 comprend deux organes d'accrochage constitués chacun d'une sangle 18 de longueur réglable s'étendant depuis la deuxième extrémité de l'enveloppe support 12 jusqu'à une extrémité libre configurée pour être fixée au siège bébé, par exemple à une partie avant de l'assise 6 opposée au dossier 7. L'extrémité libre de chaque sangle peut être configurée pour être enfilée dans une boucle montée sur le siège bébé. En variante, l'extrémité libre de chaque sangle peut être pourvue d'un élément d'accrochage, tel qu'un crochet ou système de bandes à boucles et crochets du type de celles commercialisées sous la marque déposée Velcro^{®}, la sangle présentant une longueur réglable.

L'enveloppe support 12 peut également être conformée pour comporter un compartiment 19 sur une partie recouvrant la surface extérieure du dossier 7, entre le dispositif de tension 17 et la capuche 14.

Afin d'améliorer la modularité du système de protection, la capuche 14 peut présenter des dimensions variables, en particulier réglable ou rétractable, ou être interchangeable pour s'adapter à différents sièges bébés.

En variante, le support 11 pourrait être réalisé de toute autre forme appropriée et notamment être rigide, en tout ou partie, et intégré ou autrement fixé au dossier du siège bébé 5. Tout autre agencement du support 11 que sur le dossier 7 pourrait, par ailleurs, être prévu, le support 11 étant conformé de manière appropriée.

Le système de protection 10 comprend également un dispositif de protection 25 comprenant une structure de protection 26, 26' gonflable montée sur le support 11. Dans les modes de réalisation représentés, la structure de protection 26, 26' est constituée d'une enveloppe unique délimitant une chambre intérieure, la chambre intérieure étant remplie d'un gaz dans l'état actif du dispositif de protection 25, et vide dans l'état inactif du dispositif de protection 25. La structure de protection 26, 26' gonflable peut être montée de manière amovible sur l'enveloppe support 12. En variante, la structure de protection 26, 26' gonflable pourrait être fixée rigidement sur l'enveloppe support 12.

Comme représenté en transparence de l'enveloppe support 12, le dispositif de protection 25 comprend un réservoir de gaz 40 et un dispositif d'actionnement 41, mécanique ou électronique, montés sur le support 11 et, en particulier, dans le compartiment 19 de l'enveloppe support 12. Le dispositif d'actionnement 41 est connecté au réservoir de gaz 40 et à la structure de protection 26, 26' et configuré pour détecter une situation d'accident de toute manière appropriée et notamment au moyen d'un ou plusieurs capteurs, tels que des accéléromètres, des capteurs de vitesses angulaires, des capteurs laser, ultrason, un capteur RFID ou autre, intégrés au support 11 ou à tout autre partie du siège bébé, de la bicyclette ou d'un équipement de protection de l'enfant, tel qu'un casque. De façon complémentaire ou alternative, le dispositif d'actionnement 41 peut communiquer par tout moyen approprié avec un autre capteur prévu sur le cadre 2 et adapté pour détecter la situation d'accident en vue notamment d'actionner un autre structure de protection destinée à protéger l'utilisateur.

Dans ces conditions, tant que le dispositif d'actionnement 41 ne détecte aucune situation d'accident, il maintient le dispositif de protection 25 dans un état inactif dans lequel la structure de protection 26, 26' est dégonflée, isolée par rapport au réservoir de gaz 40 et repliée sur le support 11, dans le compartiment 19 de l'enveloppe support 12. En revanche, aussitôt que le dispositif d'actionnement 41 détecte une situation d'accident, il fait passer le dispositif de protection 25 dans un état actif dans lequel la structure de protection 26, 26' est mise en communication de fluide avec le réservoir de gaz 40 pour être gonflée.

Afin d'éviter tout gonflage intempestif de la structure de protection 26, 26' lorsque le support 11 est manipulé indépendamment du siège bébé 5, le dispositif d'actionnement 41 peut, par ailleurs, être configuré pour mettre le dispositif de protection 25 :
- dans un état verrouillé lui interdisant de passer dans l'état actif tant que le support 11 n'est pas monté sur le dossier 7 du siège bébé 5, y compris lorsqu'un signal représentatif d'une situation d'accident est délivré,
- dans un état déverrouillé autorisant le dispositif de protection à passer dans l'état actif lorsque le support 11 est monté sur le dossier 7 du siège bébé 5 et qu'une situation d'accident est détectée.

Dans les modes de réalisation représentés, le dispositif d'actionnement 41 comprend un capteur adapté pour détecter le montage du support sur le siège bébé et, en particulier, de la capuche 14 sur la partie supérieure du dossier 7. Par exemple, le capteur peut être électromagnétique de type Reed peut être positionné sur l'un des pans de la capuche 14 sur une plaque métallique agencée pour coopérer avec un aimant sur l'autre pan de la capuche 14. Ainsi lorsque le support 11 est positionné sur le siège bébé 5, les pans de la capuche 14 sont disposés de part et d'autre du dossier 7 et la plaque métallique est éloignée de l'aimant. Le capteur électromagnétique délivre un signal correspondant autorisant le dispositif de protection 25 à passer dans l'état actif lorsqu'une situation d'accident est détectée. En revanche, aussitôt le support 11 retiré, l'aimant se colle à la plaque métallique de sorte que le capteur électromagnétique délivre un signal correspondant interdisant tout passage du dispositif de protection 25 dans l'état actif. En variante, tout autre capteur agencé de manière appropriée sur l'enveloppe support 12 ou les sangles 18 pourrait être utilisé. Par exemple, une boucle coupe-circuit peut être prévue dans les sangles 18.

Le dispositif d'actionnement 41 peut être configuré pour fournir une indication à l'utilisateur de l'état choisi parmi l'état verrouillé et l'état déverrouillé dans lequel est le dispositif de protection 25.

En variante, le dispositif de protection 25 pourrait comprendre une structure de protection 26, 26' gonflable constituée de plusieurs enveloppes, et comprenant un ou plusieurs réservoirs de gaz 40 reliés à chacune des enveloppes.

La structure de protection 26, 26' est configurée pour entourer au moins en partie l'espace de réception 8 autour d'un axe de structure A sensiblement perpendiculaire à l'assise 6 dans l'état actif du dispositif de protection 25.

Dans les modes de réalisations représentés, la structure de protection 26, 26' comporte une partie de protection latérale 27 destinée à protéger l'enfant selon la direction transversale T. La partie de protection latérale 27 comporte deux parois latérales 28 solidarisées au support 11 et configurées pour s'étendre en regard l'une de l'autre, de part et d'autre de l'espace de réception 8 le long de la surface extérieure du siège bébé 5, dans l'état actif du dispositif de protection 25. Les parois latérales 28 présentent une hauteur telle qu'elles s'étendent au-dessus des bords supérieurs des accoudoirs 9 dans l'état actif du dispositif de protection 25.

La structure de protection 26, 26' comporte également une partie de protection frontale 30 et une partie de protection dorsale 29 destinées à protéger l'enfant selon la direction longitudinale L. La partie de protection frontale 30 comporte une paroi frontale 31 solidarisée au support 11 et est configurée pour s'étendre en regard de l'espace de réception 8 dans l'état actif du dispositif de protection 25. La partie de protection dorsale 29 comporte, quand à elle, une paroi dorsale solidarisée au support 11 et configurée pour s'étendre en regard de la surface extérieure du dossier 7.

Dans les modes de réalisations représentés, sans y être limité, la structure de protection 26, 26' est constituée d'un ensemble de manchons tubulaires 32.

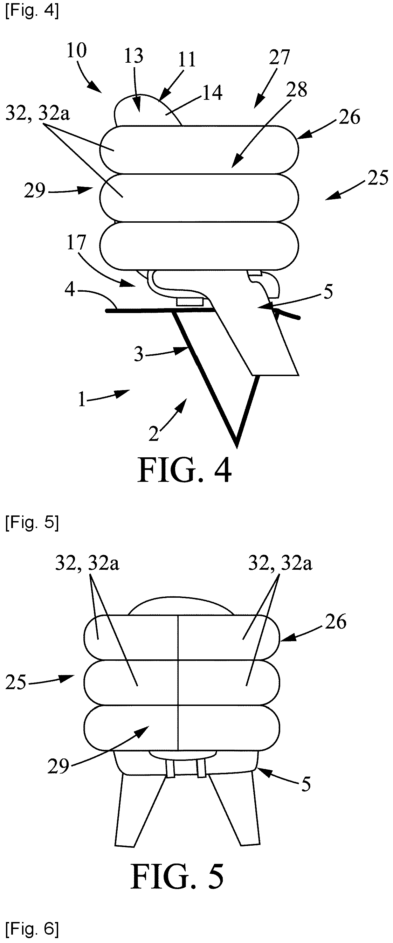

En particulier, dans un premier mode de réalisation représenté sur les figures 4 à 6 représentant le dispositif de protection 25 dans l'état actif avec la structure de protection 26 gonflée, la structure de protection 26 est cylindrique de section carrée selon l'axe de structure A. Chacune des parois latérales 28 de la partie de protection latérale 27 comprend un ensemble de manchons tubulaires 32a parallèles entre eux et s'étendant dans des plans horizontaux, comprenant les directions longitudinale L et transversale T. Les manchons tubulaires 32a des parois latérales 28 se prolongent par deux retours 33 s'étendant l'un vers l'autre en regard de l'espace de réception 8 pour former la paroi frontale 31.

Sur la surface extérieure du dossier 7, la structure de protection 26 comprend un manchon tubulaire vertical s'étendant selon une direction verticale V, perpendiculaire aux directions longitudinale L et transversale T. Les manchons tubulaires 32a comportent des tronçons horizontaux connectés au manchon tubulaire vertical 32b pour former la paroi dorsale de la partie de protection dorsale 29. Le manchon tubulaire vertical 32b est connecté au réservoir de gaz 40 et à l'ensemble des manchons tubulaires 32a des parois latérales 28 et frontale 31 afin que la structure de protection 26 puisse être réalisée à partir d'une seule enveloppe comme indiqué précédemment.

Pour assurer la protection en cas de choc, les retours 33 formant la paroi frontale 31 peuvent être pourvus d'un système d'accrochage configuré pour les accrocher l'un à l'autre dans l'état actif du dispositif de protection 25. Le système d'accrochage peut, par exemple, comprendre des bandes à crochets et à boucles solidarisées aux extrémités des retours 33.

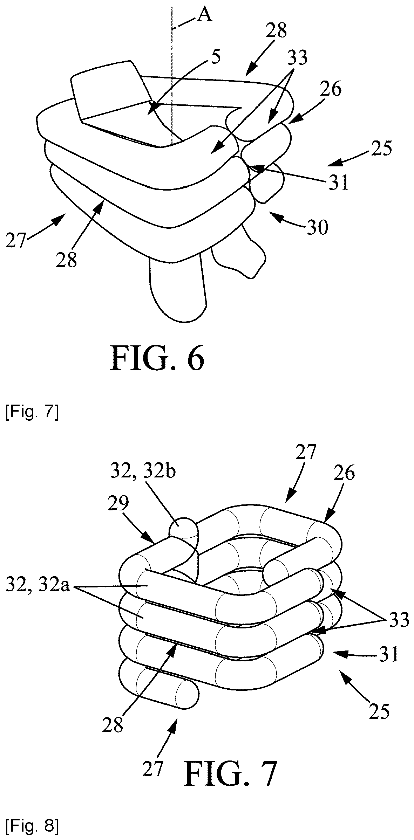

De façon complémentaire ou alternative, comme représenté sur la figure 7, les retours 33 peuvent être configurés pour se chevaucher selon la direction longitudinale L dans l'état actif du dispositif de protection 25.

De façon complémentaire ou alternative, comme représenté sur la figure 8, pour améliorer la cohésion et la rigidité d'ensemble de la structure de protection 26, une ou plusieurs toiles 35 peuvent être solidarisées à l'ensemble de manchons tubulaires 32a de chacune des parois latérales 28. Ces toiles assurent le maintien des manchons tubulaires pour éviter que l'enfant ou un membre de l'enfant ne puisse passer au travers de la structure de protection 26. Elles préviennent également l'intrusion d'objet dans l'espace de réception 8.

Comme représenté sur les figures 9 et 10, en utilisation, la capuche 14 de l'enveloppe support 12 est enfilée par la première extrémité 15 sur la partie supérieure du dossier 7 du siège bébé 5 jusqu'à ce que la deuxième extrémité 16 de la capuche 14 soit en contact avec la partie supérieure du dossier 7. La capuche 14 est maintenue en position en tirant sur les sangles 18 du dispositif de tension 17. Dans cet état, le capteur du dispositif d'actionnement 41 détecte le montage du support 11 sur le siège bébé 5 de sorte à autoriser le passage du dispositif de protection 25 dans l'état actif lorsqu'une situation d'accident est détectée. L'enfant peut être installé dans l'espace de réception 8 et l'utilisateur circule sur la voie appropriée.

Tant qu'aucune situation d'accident n'est détectée, le dispositif de protection 25 reste dans l'état inactif dans lequel la structure de protection 26 est dégonflée. Les parois latérales 28 et frontale 31 sont repliées dans le compartiment 19 de l'enveloppe support 12.

Lorsqu'une situation d'accident est détectée, le dispositif d'actionnement 41 fait passer le dispositif de protection 25 dans l'état actif dans lequel la structure de protection 26 est mise en communication de fluide avec le réservoir de gaz 40 et commence à se déployer autour du siège bébé 5 en commençant par la paroi dorsale de la partie de protection dorsale 29 puis en poursuivant avec les parois latérales 28 de la partie de protection latérale 27 jusqu'à la paroi frontale 31 de la partie de protection frontale 30. Les figures 11 à 15 illustrent un deuxième mode de réalisation du système de protection 10 qui diffère principalement du premier mode de réalisation du système de protection 10 décrit précédemment en ce que la structure de protection 26' présente une forme différente. Pour les autres composants et le fonctionnement du système de protection 10 selon le deuxième mode de réalisation, l'on se référera à la description qui en a déjà été faite en relation avec le premier mode de réalisation.

Dans le deuxième mode de réalisation, la structure de protection 26' est cylindrique de section circulaire selon l'axe de structure A. La paroi dorsale de la partie de protection dorsale 29', les parois latérales 28' de la partie de protection latérale 27' et la paroi frontale 31' de la partie de protection frontale 30' comprennent chacune un ensemble de manchons tubulaires 32a' parallèles entre eux et s'étendant selon la direction verticale V depuis un manchon tubulaire inférieur 34 périphérique connecté au réservoir de gaz 40.

Dans une variante représentée sur la figure 16, la structure de protection 26' comporte une partie de protection supérieure 36 destinée à protéger l'enfant selon la direction verticale V. La partie de protection supérieure 36 comportant une paroi supérieure 37 solidarisée au support 11 et configurée pour s'étendre transversalement par rapport à l'axe de structure A dans l'état actif du dispositif de protection 25.

L'enveloppe de la structure de protection 26, 26' constituée de manchons tubulaires dans les premier et deuxième modes de réalisation représentés pourrait être réalisée de toute autre manière appropriée et, en particulier, avec deux couches de tissus en regard l'une de l'autre et reliées l'une à l'autre, par exemple par des fils intérieurs ou des membranes intérieures, pour former la chambre intérieure.

## Revendications

1. Système de protection (10) d'un enfant sur un siège bébé (5) de bicyclette (1),
* le siège bébé (5) comportant une assise (6) et un dossier (7) délimitant un espace de réception (8) orienté selon une direction longitudinale (L) pour recevoir l'enfant,
* le siège bébé (5) présentant une surface extérieure opposée à l'espace de réception (8),
■ le système de protection (10) comprenant :
- un support (11) configuré pour être monté sur la surface extérieure du dossier du siège bébé (5),
ce support (11) comprenant un système de fixation amovible (13) au siège bébé (5),
- un dispositif de protection (25) comprenant une structure de protection (26 ; 26') gonflable montée sur le support (11),
dans lequel le dispositif de protection (25) présente :
• tant qu'aucune situation d'accident n'est détectée, un état inactif dans lequel la structure de protection (26 ; 26') est dégonflée et repliée sur le support (11),
• lorsqu'une situation d'accident est détectée, un état actif dans lequel la structure de protection (26 ; 26') est gonflée, de sorte à entourer au moins en partie l'espace de réception (8) autour d'un axe de structure (A) sensiblement perpendiculaire à l'assise (6),
■ le système de protection (10) étant **caractérisé en ce que** le système de fixation amovible (13) comprend :
-+ une capuche (14) configurée pour être enfilée sur une partie supérieure du dossier (7) opposée à l'assise (6),
-+ et un dispositif de tension configuré pour mettre en tension la capuche (14) sur la partie supérieure du dossier (7).

2. Système de protection (10) selon la revendication 1, dans lequel le support (11) comprend une enveloppe support (12) souple configurée pour recouvrir au moins une partie de la surface extérieure du dossier (7), l'enveloppe support (12) s'étendant entre une première extrémité comprenant la capuche (14), et une deuxième extrémité opposée à la première extrémité, le dispositif de tension (17) comprenant au moins un organe d'accrochage solidarisé à la deuxième extrémité de l'enveloppe support (12) et configuré pour être fixé sur le siège bébé à distance de la partie supérieure du dossier (7).

3. Système de protection (10) selon la revendication 2, dans lequel l'organe d'accrochage comprend une sangle (18) de longueur réglable s'étendant depuis la deuxième extrémité de l'enveloppe support (12) jusqu'à une extrémité libre configurée pour être fixée au siège bébé.

4. Système de protection (10) selon l'une quelconque des revendications 2 et 3, dans lequel l'enveloppe support (12) comporte un compartiment (19) sur une partie recouvrant la surface extérieure du dossier (7), entre le dispositif de tension (17) et la capuche (14).

5. Système de protection (10) selon l'une quelconque des revendications 1 à 4, dans lequel la structure de protection (26, 26') gonflable est montée de manière amovible sur le support (11).

6. Système de protection (10) selon l'une quelconque des revendications 1 à 5, dans lequel la structure de protection (26 ; 26') comporte une partie de protection latérale (27 ; 27') destinée à protéger l'enfant selon une direction transversale (T), la partie de protection latérale (27 ; 27') comportant deux parois latérales (28) solidarisées au support (11) et configurées pour s'étendre en regard l'une de l'autre, de part et d'autre de l'espace de réception (8) dans l'état actif du dispositif de protection (25).

7. Système de protection (10) selon la revendication 6, dans lequel chacune de parois latérales (28 ; 28') de la partie de protection latérale (27) est constituée d'un ensemble de manchons tubulaires (32, 32a ; 32a'), et dans lequel le dispositif de protection comporte en outre au moins une toile (35) solidarisée à l'ensemble de manchons tubulaires (32, 32a ; 32a') de chacune des parois latérales (28 ; 28').

8. Système de protection (10) selon l'une quelconque des revendications 6 et 7 pour un siège bébé (5) comprenant des accoudoirs (9) délimitant l'espace de réception (8) selon la direction transversale (T), les accoudoirs (9) présentant respectivement des bords supérieurs à distance de l'assise (6), dans lequel les parois latérales (28 ; 28') s'étendent au-dessus des bords supérieurs des accoudoirs (9) dans l'état actif du dispositif de protection (25).

9. Système de protection (10) selon l'une quelconque des revendications 1 à 8, dans lequel la structure de protection (26 ; 26') comporte une partie de protection frontale (30 ; 30') destinée à protéger l'enfant selon la direction longitudinale (L), la partie de protection frontale (30 ; 30') comportant une paroi frontale (31 ; 31') solidarisée au support (11) et configurée pour s'étendre en regard de l'espace de réception (8) dans l'état actif du dispositif de protection (25).

10. Système de protection (10) selon l'une quelconque des revendications 1 à 9, dans lequel la structure de protection (26 ; 26') comporte une partie de protection dorsale (29 ; 29') destinée à protéger l'enfant selon la direction longitudinale (L), la partie de protection dorsale (29 ; 29') comportant une paroi dorsale solidarisée au support (11) et configurée pour s'étendre en regard de la surface extérieure du dossier (7).

11. Système de protection (10) selon l'une quelconque des revendications 1 à 10, dans lequel le dispositif de protection (25) est configuré pour présenter un état verrouillé interdisant le dispositif de protection (25) de passer dans l'état actif tant que le support (11) n'est pas monté sur le dossier (7) du siège bébé (5), et un état déverrouillé autorisant le dispositif de protection (25) à passer dans l'état actif lorsque le support (11) est monté sur le dossier (7) du siège bébé (5) et qu'une situation d'accident est détectée.

12. Utilisation d'un système de protection (10) selon l'une quelconque des revendications 1 à 11 pour protéger un enfant sur un siège bébé (5) de bicyclette (1), le siège bébé (5) comportant une assise (6) et un dossier (7) délimitant un espace de réception (8) orienté selon une direction longitudinale (L) pour recevoir l'enfant, l'utilisation prévoyant de :
- monter le support (11) sur le siège bébé (5) en enfilant la capuche (14) du système de fixation amovible (13) sur la partie supérieure du dossier (7) opposée à l'assise (6), et en mettant en tension la capuche (14) sur la partie supérieure du dossier (7) par le dispositif de tension,
- tant qu'aucune situation d'accident n'est détectée, laisser le dispositif de protection (25) dans l'état inactif dans lequel la structure de protection (26 ; 26') est dégonflée et repliée sur le support (11),
- lorsqu'une situation d'accident est détectée, faire passer le dispositif de protection (25) dans l'état actif dans lequel la structure de protection (26 ; 26') est gonflée de sorte à entourer au moins en partie l'espace de réception (8) autour d'un axe de structure (A) sensiblement perpendiculaire à l'assise (6).

## Patentansprüche

1. System zum Schutz (10) eines Kindes auf einem Kindersitz (5) eines Fahrrads (1),
- wobei der Kindersitz (5) eine Sitzfläche (6) und eine Rückenlehne (7) umfasst, die einen Aufnahmeraum (8) begrenzen, der in einer Längsrichtung (L) ausgerichtet ist, um das Kind aufzunehmen,
- wobei der Kindersitz (5) eine Außenfläche aufweist, die dem Aufnahmeraum (8) gegenüberliegt,
▪ wobei das Schutzsystem (10) umfasst:
- einen Träger (11), der dazu ausgebildet ist, an der Außenfläche der Rückenlehne des Babysitzes angebracht zu werden,
wobei der Träger (11) ein abnehmbares Befestigungssystem (13) am Kindersitz (5) umfasst,
- eine Schutzvorrichtung (25) mit einer aufblasbaren Schutzstruktur (26; 26'), die an dem Träger (11) angebracht ist,
wobei die Schutzvorrichtung (25) aufweist:
• solange keine Unfallsituation erkannt wird, einen inaktiven Zustand, in dem die Schutzstruktur (26; 26') entlüftet und an dem Träger (11) gefaltet ist,
• wenn eine Unfallsituation erkannt wird, einen aktiven Zustand, in dem die Schutzstruktur (26; 26') aufgeblasen ist, so dass sie den Aufnahmeraum (8) um eine Strukturachse (A), die im Wesentlichen senkrecht zur Sitzfläche (6) verläuft, wenigstens teilweise umschließt,
▪ wobei das Schutzsystem (10) **dadurch gekennzeichnet ist, dass** das abnehmbare Befestigungssystem (13) umfasst:
→ eine Kapuze (14), die dazu ausgebildet ist, über einen oberen Teil der Rückenlehne (7), der der Sitzfläche (6) gegenüberliegt, gezogen zu werden,
→ und eine Spannvorrichtung, die dazu ausgebildet ist, die Kapuze (14) über den oberen Teil der Rückenlehne (7) zu spannen.

2. Schutzsystem (10) nach Anspruch 1, wobei der Träger (11) eine flexible Trägerhülle (12) umfasst, die dazu ausgebildet ist, wenigstens einen Teil der Außenfläche der Rückenlehne (7) zu bedecken, wobei sich die Trägerhülle (12) zwischen einem ersten Ende, das die Kapuze (14) umfasst, und einem zweiten Ende, das dem ersten Ende gegenüberliegt, erstreckt, wobei die Spannvorrichtung (17) wenigstens ein Einhakelement umfasst, das fest mit dem zweiten Ende der Trägerhülle (12) verbunden und dazu ausgebildet ist, in einem Abstand vom oberen Teil der Rückenlehne (7) am Kindersitz befestigt zu werden.

3. Schutzsystem (10) nach Anspruch 2, wobei das Einhakelement einen Gurt (18) mit einstellbarer Länge umfasst, der sich vom zweiten Ende der Trägerhülle (12) bis zu einem freien Ende erstreckt, das dazu ausgebildet ist, am Kindersitz befestigt zu werden.

4. Schutzsystem (10) nach einem der Ansprüche 2 oder 3, wobei die Trägerhülle (12) an einem Teil, der die Außenfläche der Rückenlehne (7) bedeckt, zwischen der Spannvorrichtung (17) und der Kapuze (14) ein Fach (19) aufweist.

5. Schutzsystem (10) nach einem der Ansprüche 1 bis 4, wobei die aufblasbare Schutzstruktur (26, 26') abnehmbar an der Trägerhülle (11) angebracht ist.

6. Schutzsystem (10) nach einem der Ansprüche 1 bis 5, wobei die Schutzstruktur (26; 26') einen Seitenschutzteil (27; 27') zum Schutz des Kindes in einer Querrichtung (T) aufweist, wobei der Seitenschutzteil (27 ; 27') zwei Seitenwände (28) umfasst, die fest mit dem Träger (11) verbunden und dazu ausgebildet sind, sich im aktiven Zustand der Schutzvorrichtung (25) auf beiden Seiten des Aufnahmeraums (8) einander gegenüberliegend zu erstrecken.

7. Schutzsystem (10) nach Anspruch 6, wobei jede der Seitenwände (28; 28') des Seitenschutzteils (27) aus einer Anordnung von rohrförmigen Hülsen (32, 32a; 32a') besteht, und wobei die Schutzvorrichtung ferner wenigstens ein Tuch (35) umfasst, das fest mit der Anordnung von rohrförmigen Hülsen (32, 32a; 32a') jeder der Seitenwände (28; 28') verbunden ist.

8. Schutzsystem (10) nach einem der Ansprüche 6 und 7 für einen Kindersitz (5), der Armlehnen (9) umfasst, die den Aufnahmeraum (8) in Querrichtung (T) begrenzen, wobei die Armlehnen (9) jeweils Oberkanten im Abstand zur Sitzfläche (6) aufweisen, wobei sich die Seitenwände (28; 28') im aktiven Zustand der Schutzvorrichtung (25) über die Oberkanten der Armlehnen (9) erstrecken.

9. Schutzsystem (10) nach einem der Ansprüche 1 bis 8, wobei die Schutzstruktur (26; 26') einen vorderen Schutzteil (30; 30') umfasst, der dazu bestimmt ist, das Kind in der Längsrichtung (L) zu schützen, wobei der vordere Schutzteil (30; 30') eine vordere Wand (31; 31') umfasst, die fest mit dem Träger (11) verbunden ist und dazu ausgebildet ist, sich im aktiven Zustand der Schutzvorrichtung (25) gegenüber dem Aufnahmeraum (8) zu erstrecken.

10. Schutzsystem (10) nach einem der Ansprüche 1 bis 9, wobei die Schutzstruktur (26; 26') einen Rückenschutzteil (29; 29') umfasst, der dazu bestimmt ist, das Kind in der Längsrichtung (L) zu schützen, wobei der Rückenschutzteil (29; 29') eine Rückenwand umfasst, die fest mit dem Träger (11) verbunden und dazu ausgebildet ist, sich gegenüber der Außenfläche der Rückenlehne (7) zu erstrecken.

11. Schutzsystem (10) nach einem der Ansprüche 1 bis 10, wobei die Schutzvorrichtung (25) dazu ausgebildet ist, einen verriegelten Zustand aufzuweisen, der es der Schutzvorrichtung (25) unmöglich macht, in den aktiven Zustand überzugehen, solange der Träger (11) nicht an der Rückenlehne (7) des Kindersitzes (5) angebracht ist, und einen entriegelten Zustand, der es der Schutzvorrichtung (25) erlaubt, in den aktiven Zustand überzugehen, wenn der Träger (11) an der Rückenlehne (7) des Kindersitzes (5) montiert ist und eine Unfallsituation erkannt wird.

12. Verwendung eines Schutzsystems (10) nach einem der Ansprüche 1 bis 11 zum Schutz eines Kindes auf einem Kindersitz (5) eines Fahrrads (1), wobei der Kindersitz (5) eine Sitzfläche (6) und eine Rückenlehne (7) umfasst, die einen Aufnahmeraum (8) begrenzen, der in einer Längsrichtung (L) ausgerichtet ist, um das Kind aufzunehmen, wobei die Verwendung vorsieht, dass:
- der Träger (11) auf dem Kindersitz (5) montiert wird, indem die Kapuze (14) des abnehmbaren Befestigungssystems (13) über den oberen Teil der Rückenlehne (7) gegenüber der Sitzfläche (6) gezogen wird und die Kapuze (14) über den oberen Teil der Rückenlehne (7) durch die Spannvorrichtung gespannt wird,
- solange keine Unfallsituation erkannt wird, die Schutzvorrichtung (25) in dem inaktiven Zustand belassen wird, in dem die Schutzstruktur (26; 26') entlüftet und auf den Träger (11) gefaltet ist,
- wenn eine Unfallsituation erkannt wird, die Schutzvorrichtung (25) in den aktiven Zustand überführt wird, in dem die Schutzstruktur (26; 26') aufgeblasen ist, so dass sie den Aufnahmeraum (8) um eine Strukturachse (A), die im Wesentlichen senkrecht zur Sitzfläche (6) verläuft, wenigstens teilweise umschließt.

## Claims

1. A system (10) for protecting a child on a baby seat (5) of a bicycle (1),
* the baby seat (5) including a seat bottom (6) and a seat back (7) delimiting a receiving space (8) oriented in a longitudinal direction (L) to receive the child,
* the baby seat (5) having an outer surface which is opposite to the receiving space (8),
■ the protection system (10) comprising:
- a support (11) configured to be mounted on the outer surface of the seat back of the baby seat (5),
this support (11) comprising a system (13) for removable fastening to the baby seat (5),
- a protection device (25) comprising an inflatable protection structure (26; 26') which is mounted on the support (11),
wherein the protection device (25) has:
• as long as no accident situation is detected, an inactive state in which the protection structure (26; 26') is deflated and folded onto the support (11),
• when an accident situation is detected, an active state in which the protection structure (26, 26') is inflated, so as to at least partially surround the receiving space (8) about a structure axis (A) which is substantially perpendicular to the seat bottom (6),
■ the protection system (10) being **characterised in that** the removable fastening system (13) comprises:
→ a hood (14) configured to be slipped onto an upper portion of the seat back (7) which is opposite to the seat bottom (6),
-+ and a tensioning device configured to tension the hood (14) on the upper portion of the seat back (7).

2. The protection system (10) according to claim 1, wherein the support (11) comprises a flexible support envelope (12) configured to cover at least one portion of the outer surface of the seat back (7), the support envelope (12) extending between a first end comprising the hood (14), and a second end which is opposite to the first end, the tensioning device (17) comprising at least one hooking member secured to the second end of the support envelope (12) and configured to be fastened to the baby seat at a distance from the upper portion of the seat back (7).

3. The protection system (10) according to claim 2, wherein the hooking member comprises a strap (18) of adjustable length extending from the second end of the support envelope (12) to a free end configured to be fastened to the baby seat.

4. The protection system (10) according to any one of claims 2 and 3, wherein the support envelope (12) includes a compartment (19) on a portion covering the outer surface of the seat back (7), between the tensioning device (17) and the hood (14).

5. The protection system (10) according to any one of claims 1 to 4, wherein the inflatable protection structure (26, 26') is removably mounted on the support (11).

6. The protection system (10) according to any one of claims 1 to 5, wherein the protection structure (26; 26') includes a lateral protection portion (27; 27') intended to protect the child in a transverse direction (T), the lateral protection portion (27; 27') including two lateral walls (28) secured to the support (11) and configured to extend opposite to each another, on either side of the receiving space (8) in the active state of the protection device (25).

7. The protection system (10) according to claim 6, wherein each of the lateral walls (28; 28') of the lateral protection portion (27) consists of a set of tubular sleeves (32, 32a; 32a'), and wherein the protection device further includes at least one canvas (35) secured to the set of tubular sleeves (32, 32a; 32a') of each of the lateral walls (28; 28').

8. The protection system (10) according to any one of claims 6 and 7, for a baby seat (5) comprising armrests (9) delimiting the receiving space (8) in the transverse direction (T), the armrests (9) respectively having upper edges at a distance from the seat bottom (6), wherein the lateral walls (28; 28') extend above the upper edges of the armrests (9) in the active state of the protection device (25).

9. The protection system (10) according to any one of claims 1 to 8, wherein the protection structure (26; 26') includes a frontal protection portion (30; 30') intended to protect the child in the longitudinal direction (L), the frontal protection portion (30; 30') including a frontal wall (31; 31') secured to the support (11) and configured to extend opposite to the receiving space (8) in the active state of the protection device (25).

10. The protection system (10) according to any one of claims 1 to 9, wherein the protection structure (26; 26') includes a back protection portion (29; 29') intended to protect the child in the longitudinal direction (L), the back protection portion (29; 29') including a back wall secured to the support (11) and configured to extend opposite to the outer surface of the seat back (7).

11. The protection system (10) according to any one of claims 1 to 10, wherein the protection device (25) is configured to have a locked state preventing the protection device (25) from switching to the active state until the support (11) is mounted on the seat back (7) of the baby seat (5), and an unlocked state enabling the protection device (25) to switch to the active state when the support (11) is mounted on the seat back (7) of the baby seat (5) and an accident situation is detected.

12. A use of a protection system (10) according to any one of claims 1 to 11 for protecting a child on a baby seat (5) of a bicycle (1), the baby seat (5) including a seat bottom (6) and a seat back (7) delimiting a receiving space (8) oriented in a longitudinal direction (L) to receive the child, the use providing for:
- mounting the support (11) on the baby seat (5) by slipping the hood (14) of the removable fastening system (13) onto the upper portion of the seat back (7) which is opposite to the seat bottom (6), and by tensioning the hood (14) on the upper portion of the seat back (7) by the tensioning device,
- as long as no accident situation is detected, leaving the protection device (25) in the inactive state in which the protection structure (26; 26') is deflated and folded onto the support (11),
- when an accident situation is detected, switching the protection device (25) to the active state in which the protection structure (26, 26') is inflated so as to at least partially surround the receiving space (8) about a structure axis (A) which is substantially perpendicular to the seat bottom (6).
